(19)

Europäisches
Patentamt
European
Patent Office
Office européen
des brevets

(11) **EP 1 380 821 B1**

(12) **EUROPEAN PATENT SPECIFICATION**

(45) Date of publication and mention
of the grant of the patent:
**05.12.2012 Bulletin 2012/49**

(51) Int Cl.:
*G01J 5/34* *(2006.01)*    *G01J 1/42* *(2006.01)*

(21) Application number: **03425198.3**

(22) Date of filing: **31.03.2003**

(54) **Matrix-type pyroelectric sensor, method for its fabrication and device for characterizing laser beams comprising said sensor**

Matrixförmiger pyroelektrischer Sensor, Verfahren zu seiner Herstellung und eine mit diesem Sensor versehene Vorrichtung zur Charakterisierung von Laserstrahlen

Senseur pyroélectrique matriciel, son procédé de fabrication et un dispositif de caractérisation de faisceaux laser comprenant ledit senseur

(84) Designated Contracting States:
**AT BE BG CH CY CZ DE DK EE ES FI FR GB GR HU IE IT LI LU MC NL PT RO SE SI SK TR**

(30) Priority: **10.07.2002 IT FI20020124**

(43) Date of publication of application:
**14.01.2004 Bulletin 2004/03**

(73) Proprietor: **CONSIGLIO NAZIONALE DELLE RICERCHE**
**00185 Roma (IT)**

(72) Inventors:
• **Capineri, Lorenzo**
**50131 Firenze (IT)**

• **Masotti, Leonardo**
**50010 Sesto Fiorentino,**
**Firenze (IT)**
• **Masotti, Giovanni**
**50010 Sesto Fiorentino,**
**Firenze (IT)**
• **Mazzoni, Marina**
**50020 S. Casciano V.P.,**
**Firenze (IT)**

(74) Representative: **Mannucci, Michele et al**
**Ufficio Tecnico Ing.A. Mannucci S.r.l.**
**Via della Scala 4**
**50123 Firenze (IT)**

(56) References cited:
**EP-A- 0 402 986    US-A- 4 804 844**
**US-A- 5 580 473**

## Description

Technical Field

The present invention relates to a matrix-type pyroelectric sensor, usable particularly, but not exclusively, for detecting the power distribution of a laser beam.

The invention also relates to a device comprising a pyroelectric sensor for the aforesaid purposes.

In a different aspect, the invention relates to a matrix-type pyroelectric sensor for the temporal reconstruction of the laser pulse and a method for obtaining this reconstruction. The laser pulse can be obtained from a pulsed laser or from a continuous laser whose beam is modulated by an external system such as a mechanical chopper or other device.

The invention also relates to a method for fabricating a sensor of the aforesaid type.

State of the Art

Pyroelectric sensors are widely used at the present time for fabricating intrusion detection devices based on infrared radiation detection, and/or for the production of sensors for television cameras, particularly for night vision, or in any case for infrared vision, for example and in particular for military use.

These sensors are based on the idea of applying one or more electrodes in a linear arrangement or in a two-dimensional matrix to each face of a film of pyroelectric material. When one of the two faces of the sensor is struck by infrared radiation, even of low intensity, this causes a temperature change in the pyroelectric material, leading to the accumulation thereon of electrical charges which are detected by means of electrodes applied to the surfaces and connected to a suitable detector circuit.

A matrix-type sensor for this application is described in US-A-6,175,114. In this known device, two sets of electrodes are applied to the two faces of a pyroelectric polymer film. Pairs of opposing electrodes with the corresponding portion of pyroelectric film interposed form individual sensitive elements for detecting infrared radiation.

US-A-3,581,092 describes a pyroelectric sensor in which the pyroelectric material used is a crystalline material, interposed between a common electrode, applied to a first face of the pyroelectric material, and a set of separate electrodes applied to the opposite face.

US-A-4,250,384 describes a pyroelectric sensor for imaging, which uses a copolymer film based on vinylidene fluoride and trifluoroethylene. Two sets of electrodes are applied, one on each of the two faces of the film.

US-A-4,532,424 describes a thermal energy detector comprising a matrix of pyroelectric sensors formed by applying electrodes to the two opposing faces of a layer of pyroelectric material. On the front face, in other words the face intended to receive the incident energy, there is formed a complex arrangement of a double layer of conductive material, with incisions which interrupt its continuity to delimit discrete sensitive areas, corresponding to the same number of electrodes on the back face. A complex process of construction for producing this sensor is also described. The process of construction requires the use of a pyroelectric material of the crystalline and non-polymeric type, for the forms of treatment suggested for creating the particular geometry which is desired.

EP-A-0269161 describes an intrusion detection sensor in which on the two faces of a film of a copolymer of trifluoroethylene and vinylidene fluoride. In a first embodiment, a sensor with a single electrode on each of the two faces of the film is provided. In a different embodiment, two electrodes are applied to the front face of the film (in other words the face intended to receive the incident energy to be detected), while a single electrode is applied to the back face. The connection thus formed between the sensitive elements is such that the elements are connected in series, to eliminate the common mode signal caused by spurious effects.

EP-A-0402986 describes a matrix-type infrared detector for the production of television cameras or other devices. The detector is produced by initially placing the electrodes in a matrix arrangement on a support and then incorporating them into the body of the pyroelectric copolymer. It is then necessary to polarize the pyroelectric copolymer film.

US-A-5,980,101 describes a method and a device for measuring the energy of a laser pulse. In this known apparatus, the laser beam is divided into two beams which are sent to two sensors, each of which detects a signal related to the energy of the laser pulse. The system can measure the energy on the basis of the time constant of the sensor which is determined independently at the first pulse of the laser.

The paper by L. Capineri, L. Masotti, P. Mazzinghi and M. Mazzoni, "Fabrication of pyroelectric PVDF linear arrays for diagnostic systems of high power CO2 laser beams", Proceedings of the 5th Italian Conference Sensors and Microsystems, Editors C. Di Natale, A. D'Amico and P. Siciliano, World Scientific Publ. Singapore Co.bPte. Ltd., 2000, pp. 411-415, describes a pyroelectric linear array sensor for monitoring the emission of a power laser. The sensor described therein is made by forming two linear series of opposing electrodes on the two faces of a strip of polyvinylidene difluoride (PVDF), by the deposition of a metallized layer on each face and the subsequent removal of the metallic material by laser to separate the electrodes from each other.

US-A-6,262,418 describes a complex infrared detection device, intended for the production of television cameras or other devices which are highly complex, because of the presence of compensation electrodes required for high-sensitivity thermal imaging applications.

In some cases, the systems and devices described in the documents cited above are particularly complex and expensive to produce, sometimes because of their specific application. In other cases, the devices, such as intrusion detection sensors, may be relatively simple, but are not designed to reproduce a thermal image.

US-A-4,906,849 describes a pyroelectric sensor used for detecting the pulsed signal of a laser. The sensitive element consists of a portion of PVDF film having a layer of heat-absorbent material on its front face. A single electrode detects the electrical signal which is generated.

US-A-4,804,844 describes a circuit for increasing the temporal resolution of a pyroelectric sensor whose specific characteristics are not described.

Objects and summary of the invention

In a first aspect, the object of the present invention is to provide a pyroelectric sensor which is particularly simple and economical, to use particularly as a sensor for monitoring the emission of lasers emitting in the infrared, visible or ultraviolet regions.

Essentially, the methods according to the invention are defined in claims 1 and 2 according to the invention a method is provided for the fabrication of a pyroelectric sensor of the type comprising a film of pyroelectric polymer material and electrodes associated with the two faces of said film, in which an essentially continuous electrode is formed on a first face of said film and a two-dimensional distribution of separate electrodes is created on the second face of said film.

Thus the sensor has a distribution of sensitive elements in the form of a matrix. Each sensitive element consists in practice of one of the electrodes of the back surface of the sensor, in other words one of the discrete electrodes, and the corresponding portion of pyroelectric polymer film, together with the corresponding portion of the essentially continuous front electrode. The electrical connection of the electrodes thus formed with the electronic circuit associated with the sensor is particularly simple, and the construction of the assembly of sensitive elements is also simple.

In a possible and particularly advantageous embodiment of the method according to the invention, the following steps are provided:

- providing a portion of polarized pyroelectric polymer film, metallized in an essentially continuous way on both of its principal faces;
- simultaneously removing part of the metallization on said two faces by laser machining, thus creating on both faces corresponding series of discrete electrodes which correspond to each other and which are distributed according to a two-dimensional distribution;
- restoring the continuity of the metallization on a first of said two faces, to form an essentially continuous single electrode on this face.

Laser machining is extremely fast, economical and precise, with easily reproducible results. Since the polymer material is essentially transparent to the infrared radiation used for laser ablation, it is not incised or damaged by the beam, whose energy is adjusted to remove only the metal of the two surface metallizations. On the other hand, a result of this transparency is the fact that the removal of the metallic material from a first face of the polymer film also causes removal from the opposite face. This makes it necessary to carry out a second stage of metallization, to restore the desired continuity of the essentially continuous front electrode of the sensor.

The use of the laser for the partial removal of the metallization has a further advantage. This consists in the fact that the polymer material is subject to localized heating in the areas in which the machining is carried out, which can cause a corresponding local depolarization of the polymer material. Consequently, in the areas corresponding to the separating lines between the electrodes of the back face, the polymer no longer has pyroelectric characteristics or in any case has reduced pyroelectric characteristics. This reduces the phenomenon of thermal "crosstalk" between adjacent electrodes, in other words reciprocal effects between adjacent electrodes.

In a different embodiment of the method of the present invention, where a non-metallized pyroelectric polymer film is used as the initial material, the following steps are provided:

- metallizing a face of a portion of said film in an essentially continuous way;
- forming said two-dimensional distribution of electrodes separated from each other on said face, by partial removal of the metallization;
- metallizing the opposing face of the pyroelectric polymer film to form said essentially continuous electrode on it.

The removal of the metallization can be carried out by laser ablation in this case also, with the particular advantages mentioned above. Alternatively, although less advantageously, it is possible to provide mechanical or chemical removal systems, with suitable masking.

Alternatively, the back surface of the film can be metallized in areas by masking and subsequent deposition of the metal, using vacuum evaporation or another suitable method, in the free areas corresponding to the required two-dimensional distribution of the back electrodes.

In a different embodiment, the following steps are provided:

- providing a portion of polarized pyroelectric polymer film, metallized in an essentially continuous way on both of its principal faces;
- partially removing the metallization from one of said two faces, creating on this face said two-dimensional distribution of electrodes by a method which does not affect the metallization on the opposing face, for example by mechanical or chemical processing.

This solution, however, is less advantageous, since it requires more costly and complicated methods for the partial removal of the continuous metallization exclusively from the back face of the film, on which the discrete electrodes are to be formed.

The pyroelectric polymer film can be based on polyvinylidene difluoride (PVDF) or other suitable materials, for example the copolymers cited in the patent literature mentioned in the introductory part of the present description.

The pyroelectric film can have a thickness in the range, for example, of approximately 10 to 100 micrometers. The metallization forming the electrodes, consisting for example of gold or equivalent materials, can have a thickness in the range from 0.01 to 1 micrometer.

The invention also relates to a pyroelectric sensor produced by the method described above.

In a different aspect, the present invention relates to a pyroelectric sensor comprising a layer consisting of a pyroelectric polymer film having a first and a second face, an essentially continuous electrode being applied to said first face and a two-dimensional distribution of discrete electrodes, positioned to correspond to said essentially continuous electrode, being formed on said second face.

A matrix-type pyroelectric sensor according to the invention can be used as a valid alternative to conventional sensors for the temporal reconstruction of a laser pulse, in other words for the determination of the temporal variation of the pulse. At the present time, mercury-cadmium-tellurium sensors with single elements measuring approximately 1 mm$^2$ are used for this purpose, and in the matrix version used for mapping the beam these are extremely costly. Because of the small size relative to the size of the laser beam, the single element sensor has the drawback of requiring the focusing or diaphragm focusing of the beam to prevent the overheating of the sensor casing, which limits its performance.

Consequently, in a further aspect, the present invention also relates to a device using a matrix-type pyroelectric sensor for the temporal reconstruction of a laser pulse, and to a method for the temporal reconstruction of the laser pulse. Thus it is possible to use the same sensor for two purposes, namely:

> the characterization of the laser beam in terms of power distribution in the cross section of the beam;
> the temporal reconstruction of the laser pulse.

Additionally, the matrix structure of the sensor enables it to be used for centering or monitoring the beam position, for example during calibration and adjustment. To sum up, therefore, a single matrix-type sensor can be used for a plurality of functions.

The following description illustrates methods which enable the temporal response of the sensor to be improved by compensating its amplitude response at the various operating frequencies of the laser.

Further advantageous characteristics and embodiments of the sensor, of the device using it and of the method for the temporal reconstruction of the laser pulse according to the invention, and also of the method for fabricating the matrix-type sensor, are indicated in the attached dependent claims and will be described with reference to examples of embodiment.

Brief description of the drawings

The invention will be more clearly understood from the description and the attached drawing, which shows a practical and non-restrictive embodiment of the invention. More particularly,

Fig. 1 is a diagram of a first embodiment of the method for forming the matrix on the polymer film;
Fig. 2 is a diagram of a second embodiment of the method for forming the matrix on the polymer film;
Figs. 3 and 4 are front views of the connecting tracks of the electrodes;
Fig. 5 shows an intermediate stage of the process of bonding the sensor;

Fig. 6 shows a schematic section through an initial stage of the bonding process;

Fig. 7 shows an enlarged section through a portion of the sensor after bonding;

Figs. 8A and 8B show two curves representing the variation of crosstalk at two different frequencies of the laser beam striking the sensor;

Fig. 9 shows the qualitative variation of the amplitude response of a pyroelectric sensor according to the invention as a function of the frequency;

Fig. 10 is a schematic block diagram of the processing sequence for the temporal reconstruction of the variation of the incident power on the sensor;

Figs. 11, 12 and 13 are diagrams of the variation of the frequency response of the sensor and of the correction functions for the compensation of the amplitude response;

Fig. 14 is a block diagram of the temporal reconstruction sequence using two functions in cascade for approximating the transfer function of the ideal compensation filter;

Fig. 15 is a diagram comparing the amplitude responses with and without the compensation filter;

Fig. 16 is a circuit diagram of an analog filter for compensating the amplitude response;

Fig. 17 is a block diagram of a device using the sensor according to the invention, with an analog implementation of the amplitude response compensation filter and of the programmable band-pass filters; and

Fig. 18 is a block diagram of a digital implementation.

The figures are not to scale and the dimensions are arbitrary. In particular, for the purpose of easier and simpler representation, the thicknesses of the individual layers of the sensor and of the supports for its mounting are not shown in their real ratio.

Detailed description of the preferred embodiments of the invention

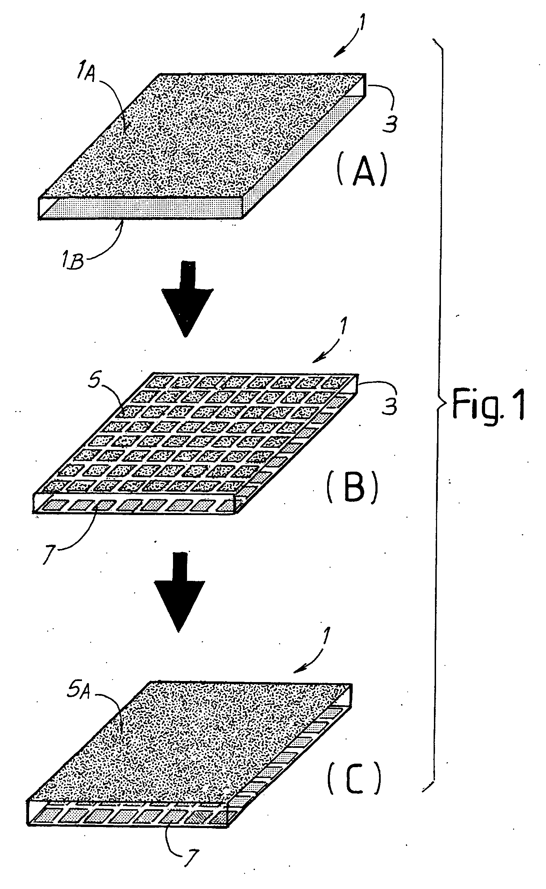

Fig. 1 shows schematically the method for fabricating the electrodes on a portion of pre-metallized pyroelectric polymer film, for example a PVDF film.

Fig. 1A shows the preliminary stage of the fabrication method. The number 1 indicates the whole of a square portion of pyroelectric polymer film 3, whose two principal faces 1A and 1B have been metallized in a preceding stage of processing. A semi-finished material of this type is commercially available and normally used for the fabrication of intrusion detection sensors or for piezoelectric sensors, since PVDF also has piezoelectric characteristics. The polymer film itself, indicated by 3, is pre-polarized.

In a first stage of processing, a laser beam striking one of the two principal faces 1A or 1B is used to machine the two metallized layers coating said faces by ablation of the metal. The result (Fig. 1B) is a portion 1 of polymer film 3 whose principal faces carry electrodes 5 and 7 which are discrete, in other words separated from each other by non-metallized strips. This is due to the fact that the polymer film is essentially transparent to the infrared laser beam used, and therefore the application of the beam to the metallization present on the upper face 1A of the portion 1 of polymer material 3 also inevitably causes the ablation of the metal in corresponding areas of the lower face 1B.

In a subsequent stage, the face 1A is metallized to restore the continuity of the metallic layer, as shown in Fig. 1C. This can be advantageously done by vacuum evaporation.

The result is a pre-polarized pyroelectric polymer film which has an essentially continuous electrode 5A on the front face 1A and a two-dimensional distribution of discontinuous electrodes 7 which form a matrix of electrodes on the back face 1 B.

The metal used can be gold, and the layers of metallization can have thicknesses of the order of 0.01 - 1 micrometers, while the polymer film 3 has a thickness of the order of 10 - 100 micrometers.

This fabrication process is particularly advantageous when the initial material is a film which is pre-metallized on both faces. It is also possible to consider other processes for removing the metallization from the back face 1 B to produce the matrix of electrodes 7. For example, it is possible to carry out mechanical machining with micro-milling machines, chemical removal by acid etching or other processes. However, the use of the laser for ablation of the metal is by far the most preferable method, although it entails the subsequent stage of metallization of the front face 1A to restore the continuity of the metallic layer forming the single electrode 5A. This is because laser machining provides very high accuracy of execution combined with high speed.

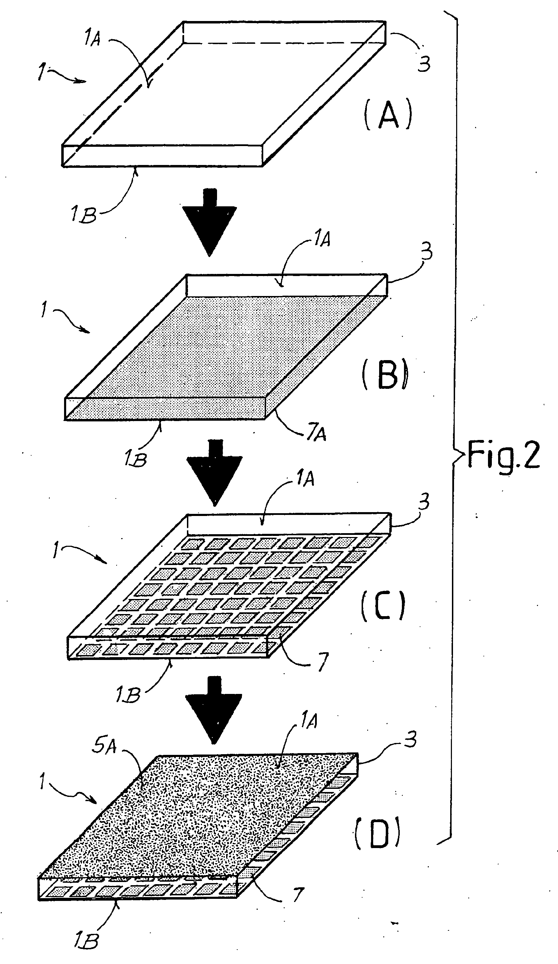

Alternatively, it is possible to use a suitable polarized but non-metallized pyroelectric film as the initial material (Fig. 2A). A portion 1 of pyroelectric film 3 is then metallized on the face 1B to form a continuous layer 7A (Fig. 2B). The metallization can be carried out, for example, by vacuum evaporation in this case also.

The continuous layer of metallization formed on the back face 1A is then machined by laser ablation (or another removal process) to create discontinuous electrodes 7 (Fig. 2C).

Finally, continuous metallization is carried out on the front face 1A of the polymer film 3, by vacuum evaporation or another equivalent method, to form a single essentially continuous front electrode 5A.

The thicknesses of the polymer layer and of the metallization layers, as well as the materials used, can be the same as those of the example in Fig. 1.

In both cases (Fig. 1 and Fig. 2), the end result of the process is a portion 1 of pyroelectric polymer film 3 on whose front face 1A a single electrode 5A is formed, while a two-dimensional matrix distribution of discrete electrodes 7 is formed on the second face.

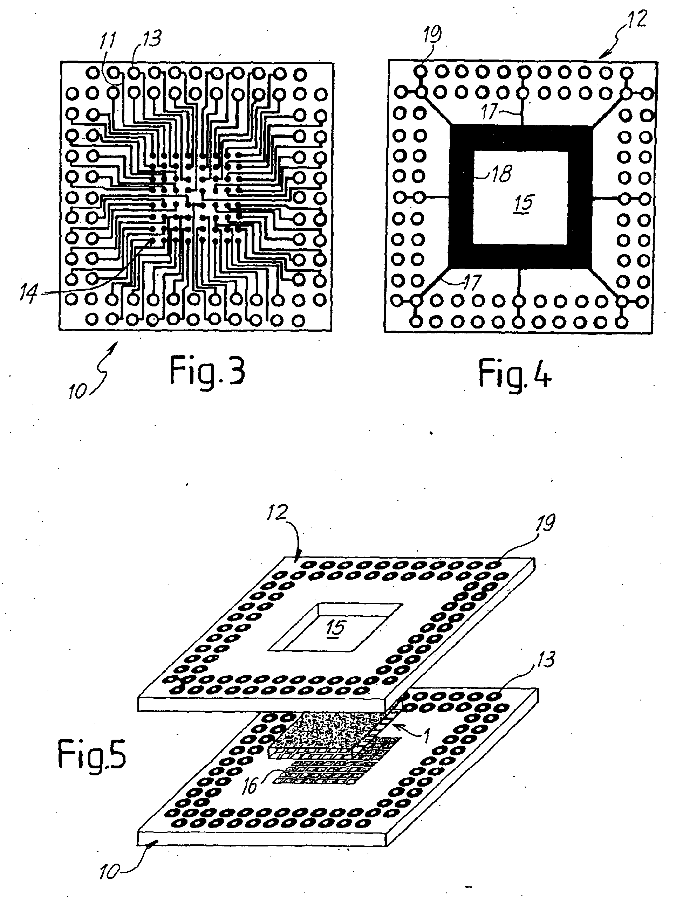

By means of a bonding process using an epoxy adhesive, this portion 1 of polymer film with its electrodes is inserted between a lower support 10 and an upper support 12 of vetronite or other suitable material, which carry the electrical connecting tracks. Figs. 3 and 4 show front views of the faces of the two supports to which the portion of polymer film 1 with its electrodes is joined.

Fig. 3 shows the face of the lower support 10 opposite the face to which the polymer film is applied with the electrodes 7 in contact with said support. Said figure shows (in the illustrated example) 64 metallized through holes 14 distributed over the central area of the support 10 in an 8x8 distribution corresponding to the distribution of the electrodes 7. These metallized through holes are in electrical contact with the same number of corresponding pads 16 on the opposite face, and are connected by conductive tracks 11 to metallized through holes 13 distributed along a perimetric strip of the support 10.

Fig. 4 shows the face of the lower support 10 which comes into contact with the polymer film 1. The face of the upper support 12 visible in Fig. 4 has a frame 18 consisting of a broad conductive track which surrounds a through aperture 15. The frame 18 is connected by conductive tracks 17 to a number of corresponding metallized through holes 19. The metallized through holes 19 of the support 12 correspond to the metallized through holes 13 of the lower support 10.

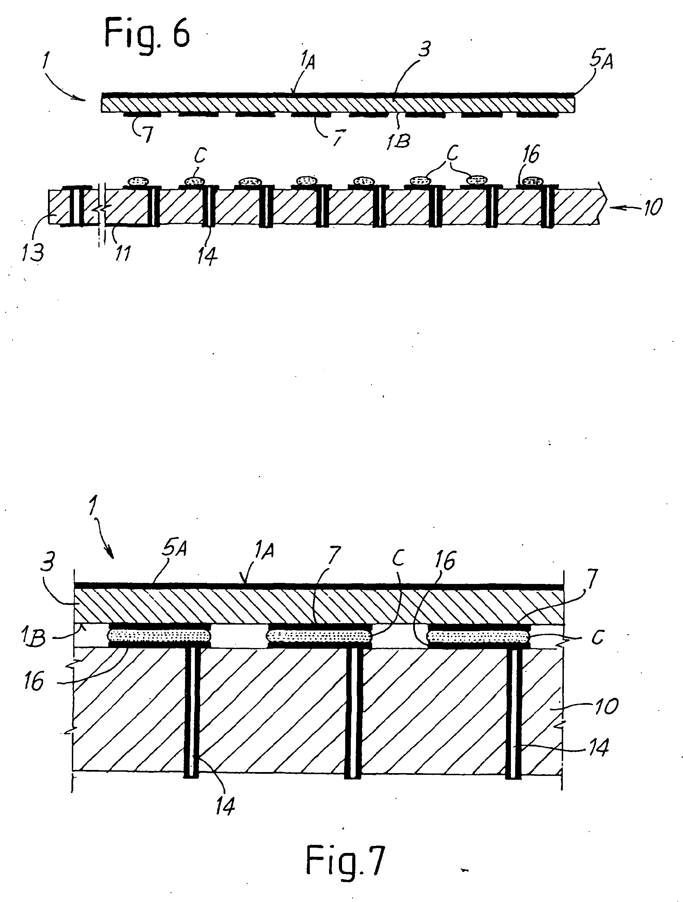

Fig. 5 is an exploded view of the assembly of the portion 1 of polymer film 3 with the corresponding electrodes and the supports 10 and 12. Fig. 6 shows the initial stage of bonding the film 1 to the lower support 10. The assembly procedure is as follows. First, an epoxy adhesive or other electrically conductive adhesive C is applied to the metallized pads 16 (Fig. 6) provided on the face of the support 10 opposite the face visible in Fig. 3, at the positions of the metallized through holes 14. The adhesive can be applied automatically by means of a syringe dispenser or other device to produce an accurate, uniform and reproducible distribution on the various pads 16.

The polymer film 1 with the electrodes 5A and 7 formed on it is then placed on the support 10, care being taken to center the electrodes 7 on the pads 16. This can be done by means of suitable centering masks or frames. The intermediate product thus obtained is visible in schematic cross section in Fig. 7, where identical parts are indicated by the same reference numbers as those of Fig. 6.

The upper support 12 is applied to the structure formed in this way, following the distribution of an electrically conductive adhesive on the frame 18.

One example of a suitable electrically conductive adhesive is the epoxy adhesive EP21 TDC/N made by Master Bond Inc., USA. Other electrically conductive adhesives can be used as alternatives.

When the two supports 10 and 12 have been joined together with the pyroelectric element interposed between them, the electronic components can be mounted on the back face of the support 10, in other words on the face opposite the face in contact with the element 1. The pins of the electronic components pass through the metallized holes 13 and 19 of the two supports 10 and 12. The metallized holes of the two sensors are soldered together and consequently electrically connected by tinning the face of the upper support 12, opposite the face in contact with the element 1. Tinning can be carried out beforehand on the two faces of the lower support 10 and the upper support 12 facing each other, at the positions of the metallized holes 13 and 19. This tinning is melted when the tinning is carried out on the outer face of the upper support 12. As a result, electrical contact is established between the various metallized holes of the two supports 10 and 12.

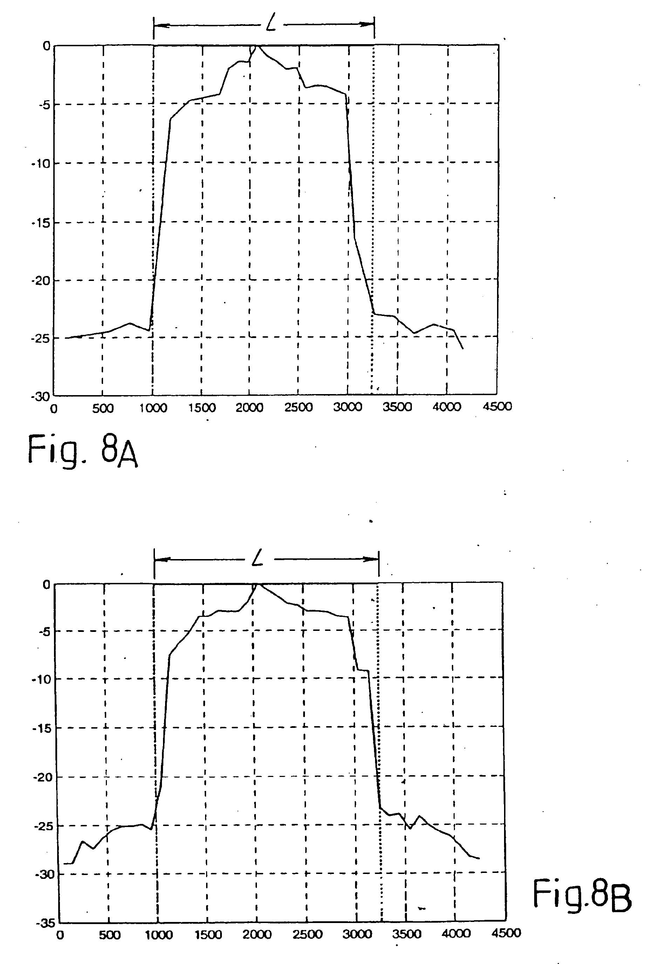

The sensor thus formed is simple and economical to fabricate. However, it is also sufficiently accurate for the applications for which it is intended, primarily the characterization of power laser beams having large dimensions, particularly those where the beam diameter is typically of the order of 6-25 mm. This is because, in spite of the presence of a single front electrode 5A, whose use considerably simplifies the construction of the sensor, the so-called "crosstalk", in other words the effect of adjacent electrodes 7 on each other, is small, as demonstrated by tests conducted on a sensor according to the invention. This is demonstrated by the diagrams of Figs. 8A and 8B. In both figures, the horizontal axis shows the position of a small laser source which emits a beam whose cross section is smaller than the size of an electrode 7; the vertical axis shows the signal detected between the common front electrode 5A and a single electrode 7. The sensor on which the tests were conducted was produced by metallizing the back surface by evaporation deposition with the aid of masking, instead of by laser ablation.

As will be noted, the output signal is practically constant while the laser beam strikes the front electrode 5A in an area located opposite the electrode 7 on which the measurement is made, while it decreases drastically when said beam leaves the area opposite the electrode 7 in question. The letter L indicates the size of the electrode 7.

The two diagrams relate to two different frequencies (180 and 52 Hz respectively) of the pulsed laser used for the test. In both cases, when the laser beam struck an area of the front electrode 5A which was not opposite the back electrode 7 in question, the output signal was -25 dB with respect to the maximum value.

This demonstrates that, regardless of the modulation frequency of the incident laser beam, the individual electrodes 7 can generate a signal which is essentially unaffected by thermal crosstalk phenomena, despite the presence of a single continuous front electrode 5A.

The sensor made in this way can be used for the in-line monitoring of a power laser, for example a laser for cutting or other operations, which operates in the infrared region, or for the spatial characterization of a laser beam, for medical purposes for example.

The individual elements of the matrix sensor can have different amplitude responses at the different frequencies. It is therefore necessary to use a suitable equalization method. A first hypothesis is that it is possible to produce sensor matrices with a uniform frequency response between the various elements, subject to a scaling factor, with a fabrication process carried out according to a standard. In view of the above hypothesis this set of coefficients can be considered valid for other values of PRF within the band of the sensors.

In this case it will be possible to equalize by evaluating the response on the first harmonic of the modulator of the laser beam with a given repetition frequency (PRF) and thus obtain a set of coefficients equal to the number of elements in the matrix.

For more advanced and low-noise performance in respect of the mapping and estimation of the position of the centroid of the beam intensity, it is possible to provide a narrow-band filtering function and equalization between the channels relating to the various elements of the matrix by using a set of coefficients calculated for each PRF (or for different ranges of PRF).

To implement this solution, it is advantageous to use a digital processing system having samplers with a resolution of at least 10 bits and a sampling frequency of >2 PRF and a buffer store for temporarily holding samples until they are transferred to the processing unit (a microcontroller or DSP) with a computing capacity sufficient to supply the results of the processing in graphic form by means of a display before the next laser pulse (in other words after a time equal to 1/PRF). To maintain the coherence of the processing it is necessary to synchronize the sampling with the modulation system of the laser source.

A possible embodiment of the equalization method relies on the use of an EEPROM memory for storing the frequency response curve of the sensor. This curve can be determined automatically by using a microcontroller which monitors the modulation frequency of a source and calculates the effective value of the fundamental harmonic of the response by means of a narrow band digital filter. These values are stored in the EEPROM and subsequently used for equalizing the various channels. It should be noted that where equalization is to be performed on a large number of modulation frequencies, the number of channels is limited by the available memory and by the computing capacity of the system to be used. In particular, only four channels are required for measuring the centering.

The pyroelectric sensor described above responds to temperature variations with an electrical signal. This electrical signal is actually produced by a movement of electrical charges caused by the thermal radiation striking the sensor. The current produced by the sensor, which is detectable by a detection circuit of a transducer of which the sensor forms part, is:

$$I \approx p\,A\,(dTm/dt) \qquad\qquad (1)$$

where

I is the current

p is the pyroelectric coefficient

A is the area of the sensor

Tm is the mean temperature of the pyroelectric material

t is the time.

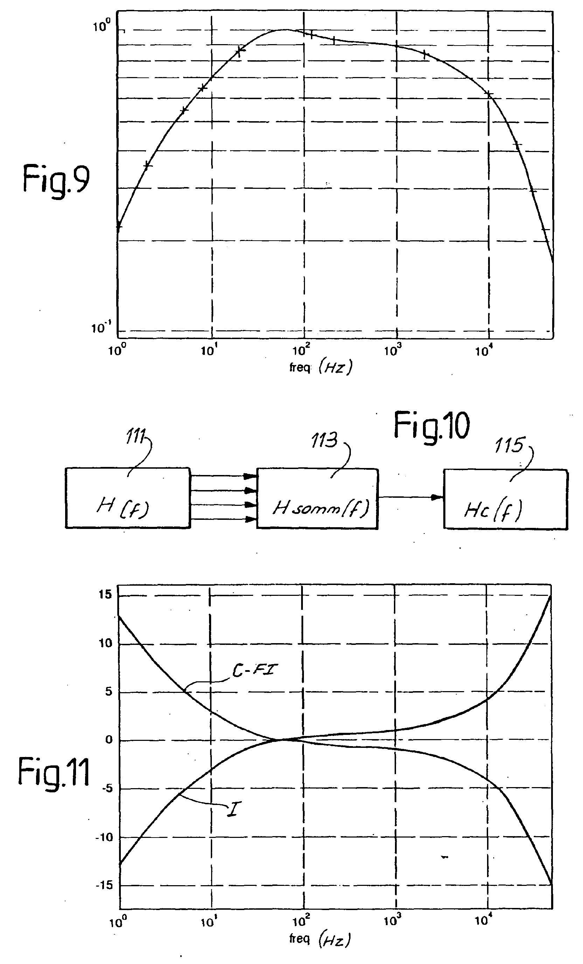

The sensor therefore responds to the variations of temperature over time; in other words, it responds in dynamic terms. In the frequency domain, equation (1) becomes

$$I = P^*A^*s^*Tm \qquad\qquad (2)$$

where s is the Laplace variable, related to the frequency f. The response signal as a function of the frequency f has a variation of the type indicated qualitatively in Fig. 9, which shows a cut-off at low frequency and one at high frequency, due to the thermal and electrical characteristics of all the layers of different material from which the sensor is made. Because of the width of the band, it is therefore possible to envisage using the sensor described above not only for characterizing a laser beam by determining its power distribution in the beam cross section, but also for reconstructing the temporal variation of the laser pulse, regardless of whether the pulse is generated by a pulsed laser or by a continuous laser modulated by a mechanical chopper.

As shown in Fig. 9, however, the variation of the modulus of the sensor response signal is strongly non-linear, and decreases from its maximum even in the range 5 Hz - 20 kHz which is important for the temporal reconstruction of the typical signal of a modulated $CO_2$ laser.

It is therefore necessary to introduce a filter for compensating the amplitude response of the sensor into the processing sequence for the temporal reconstruction of the variation of the power incident on the sensor. The block diagram of the processing sequence is shown in Figure 10. The block 111 represents the combination of the sensor and the corresponding signal amplification circuit. In practice, an amplifier is provided for each channel of the sensor, in other words for each electrode 7. The signals of a plurality of channels (four in the schematic example of Fig. 10) are added in an adder 113. The added signal is applied to the correction filter 115. The transfer functions of the different blocks are shown in the three blocks 111, 113 and 115. With reference to the symbols shown in Fig. 10, the transfer function for the whole system is given by

$$H_{System}(f) = H(f) \cdot H_{Sum}(f) \cdot H_c(f) = G \cdot H(f) \cdot H_c(f) \; for \; f < f_\tau \qquad (3)$$

where $f$ is the frequency. The adder has a transfer function of the low pass type with a cut-off frequency $f_T$ much greater than the upper limit (20 kHz) of the band in question and an in-band gain of "G", so that it does not cause further changes in the response signal (hence the replacement of $H_{sum}$ with "G" in equation (3)).

In practice, as described previously, the sensor comprises a matrix distribution of a plurality of sensitive elements consisting of the electrodes 7. Whereas the signals of all the electrodes are usually required for detecting the power distribution of laser beam in the beam cross section, the temporal reconstruction of the laser pulse can be obtained by operating on the signals which in theory can come from a single electrode, provided that it has been struck by the said beam. In practice, the sensor can be used in a first stage of calibration or adjustment for centering the laser beam, for example by determining the centroid of the beam cross section and positioning this centroid in the center of the matrix. Assuming that the position of the beam remains essentially centered while the sensor is in use, it is then possible to use a certain number of electrodes of the central area of the matrix of electrodes 7, and not necessarily all the electrodes, for the temporal reconstruction of the laser pulse. In this case, the signals from the central elements of the matrix are added in the addition block 113. The possibility of using the signal from all the electrodes and then adding all these signals in the adder 113 is not excluded. The variation of the sum of the signals as a function of frequency always has the qualitative form shown in Fig. 9.

To make the sensor response constant by means of the sequence shown in Figure 10, it is necessary to have

$$H_c(f) = \frac{k_1}{G \cdot H(f)} = k_2 \frac{1}{H(f)} \qquad (4)$$

where $k_2$ is a gain factor. The variation of the modulus of the transfer function of the correction filter is therefore calculated from the variation of the modulus of the sensor response signal, and is equal to:

$$|H_c(f)| = \frac{1}{|H(f)|} \qquad (5)$$

The variation of the modulus of the transfer function of the filter is represented by the curve $C_{FI}$ of Fig. 11, shown in a diagram which also shows the variation of the sensor response (curve I) as a function of frequency.

At this point it is necessary to determine a mathematical function which describes the variation of the modulus of the correction filter to enable it to be implemented with an analog filter or a digital filter in a microcontroller. If the filter is to be implemented in analog form, the most direct mathematical function for its implementation is a polynomial function with real coefficients in the following form:

$$H_{fit}(S) = \frac{a_1 S^2 + a_2 S + a_5}{S^2 + (a_3/a_4)S + a_3^2} \tag{6}$$

It is difficult to determine a set of coefficients which provides an acceptable approximation (in-band "ripple") over the whole range of frequencies in question. It is therefore proposed that two approximation functions be calculated, and consequently two sets of coefficients, for two different and partially overlapping frequency ranges. Thus, essentially, two filters are obtained which, when connected in cascade, provide the desired result.

More particularly, by proceeding empirically, with a computer program of a known type it is possible to find the values of the coefficients $a_1$-$a_5$ which minimize the error between $H_{fit}(f)$ and $H_c(f)$ by setting a first frequency range, for example from 100 Hz to 7 kHz. The result of the calculation is as follows:

$$H_{fit}(S) = \frac{1.647 S^2 + 4.2 \cdot 10^4 S + 691.1}{S^2 + 3.8 \cdot 10^4 S + 1.197 \cdot 10^7} \tag{7}$$

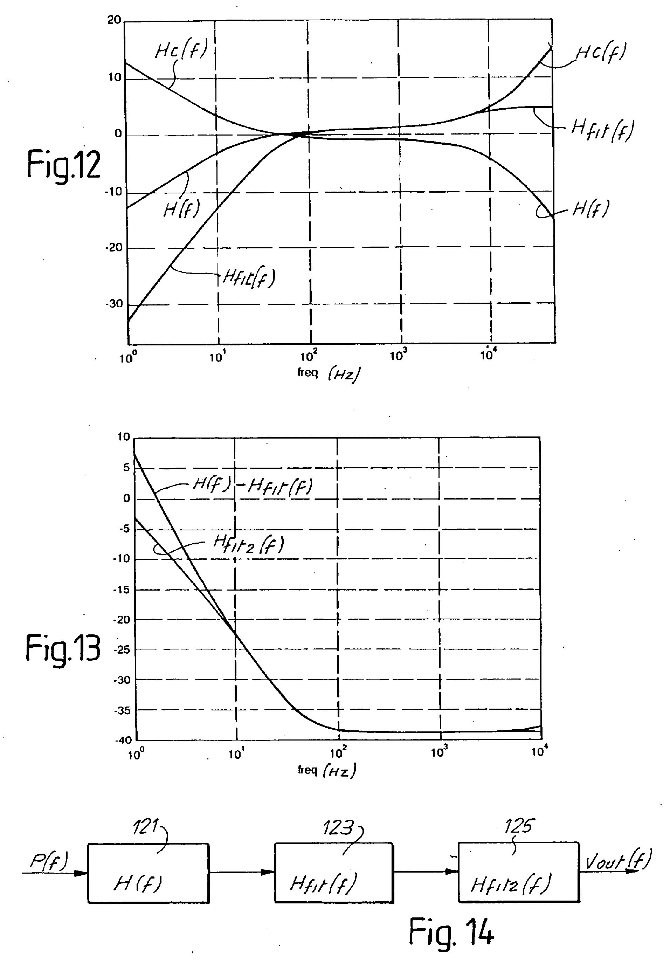

The variation of $H_{fit}(f)$ is shown in the diagram of Fig. 12, compared with the variation of the sensor response without the application of the filter (curve $H(f)$) and with the variation of the transfer function of the ideal filter $(H_c(f))$. It should be noted that the curve $H_{fit}(f)$ represents an acceptable approximation to the transfer function of the ideal filter only in one part of the frequency range in question. Since these coefficients do not provide a sufficiently accurate approximation to the whole function $H_c(f)$ over the whole frequency range, the result of the application of the first filter represented by equation (7) (curve $H_{fit}(f)$ in Fig. 12), the result of the first filtering is used as the input for a new application of the algorithm of approximation of the inverse function. By contrast with the preceding application, in this case the function to be corrected is $H(f)H_{fit}(f)$, and it is therefore necessary to determine a function $H_{fit2}(f)$ of the type defined by equation (6) such that

$$H_{fit2}(f) = \frac{1}{H(f) \cdot H_{fit}(f)} \tag{8}$$

The result of the calculation, if a frequency range of 15 Hz to 250 Hz, for example, is set, is given in this case by:

$$H_{fit2}(S) = \frac{1.146 S^2 + 511.32 S + 72900}{S^2 + 155.687 S + 271.668} \tag{9}$$

The variation of the function is shown in Fig. 13 (curve $H_{fit2}(f)$) and is there compared with the variation of the function to be approximated, indicated by $H(f)H_{fit}(f)$.

Essentially, therefore, the operation of reconstructing the signal, which in Fig. 10 is carried out by applying a single ideal filter with the transfer function $H_c(f)$, is actually carried out by means of a double pass through two filters, according to the block diagram of Fig. 14. In this figure, the number 121 indicates the block representing the set of transfer functions of the sensor and of the amplifier, and also of the adder (blocks 111 and 113 of Fig. 11), while the numbers 123 and 125 indicate the blocks representing the transfer functions of the two filters in cascade.

Overall, the correction filter is found as the product of the two calculated blocks and its transfer function is expressed by:

$$H_{filter}(S) = \frac{1.89 S^4 + 48957 S^3 + 2.16 \cdot 10^7 S^2 + 3.06 \cdot 10^9 S + 5.04}{S^4 + 3.82 \cdot 10^4 S^3 + 1.79 \cdot 10^7 S^2 + 1.89 \cdot 10^9 S + 3.25 \cdot 10^9} \tag{10}$$

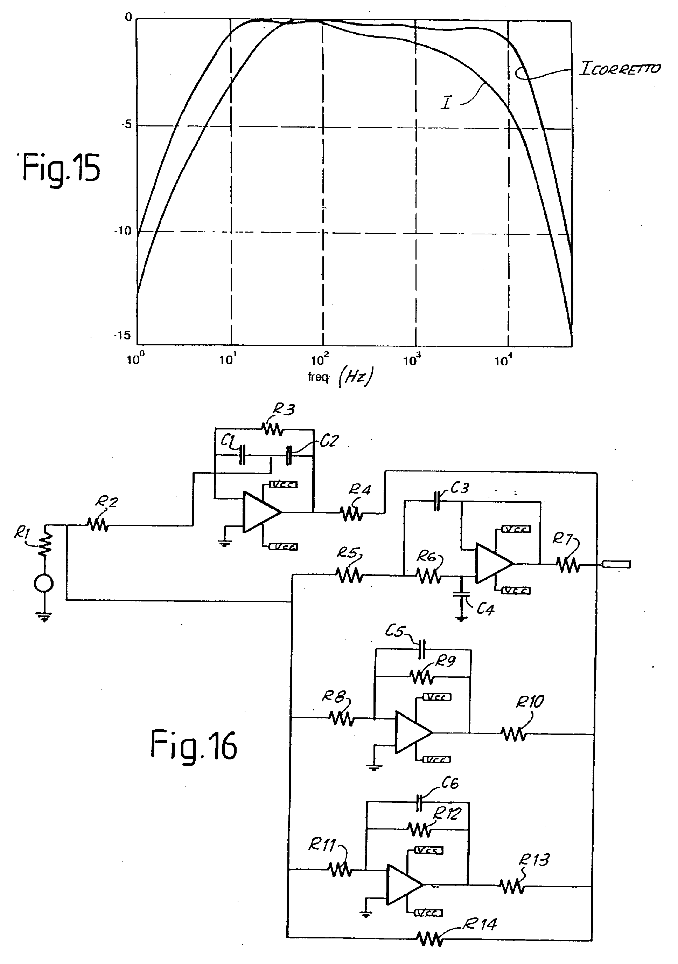

The variation of the normalized signal amplitude obtained at the output of the reconstruction sequence is shown in Fig. 15 (curve $I_{correct}$) and is there compared with the variation in the absence of the correction filter (curve I).

The transfer function of the filter described by equation (10) can be obtained in three ways:

> by constructing a network described by equation (10);
> by constructing the networks which implement equations (7) and (9);
> or by software means, using digital filters.

If the first approach is followed, it will be found that the possible circuits which implement the fourth order function expressed by (10) have excessively high values of the capacitive elements, causing problems in the practical construction. Equation (10) is therefore approximated with a sixth order function expressed by

$$H_{fc}(S) = \frac{2.359 \cdot 10^{-2} S^6 + 1524 S^5 + 2.43 \cdot 10^7 S^4 + 1.363 \cdot 10^{10} S^3 + 2.863 \cdot 10^{12} S^2 + 2.039 \cdot 10^{14} S + 2.225 \cdot 10^{12}}{S^6 + 7.721 \cdot 10^4 S^5 + 1.513 \cdot 10^9 S^4 + 8.914 \cdot 10^{11} S^3 + 1.664 \cdot 10^{14} S^2 + 1.008 \cdot 10^{16} S + 1.748 \cdot 10^{16}}$$

$$= \frac{2.359 \cdot 10^{-2} (S + 2.643 \cdot 10^4)(S + 0.03658)(S^2 + 424.1 S + 5.795 \cdot 10^4)(S + 3.768 \cdot 10^4)(S + 149.8)}{(S + 3.895 \cdot 10^4)(S + 303.3)(S + 147.2)(S + 1.563)(S + 3.766 \cdot 10^4)(S + 149.5)}$$

$$(11)$$

A diagram of the circuit which implements this function is shown in Fig. 16.

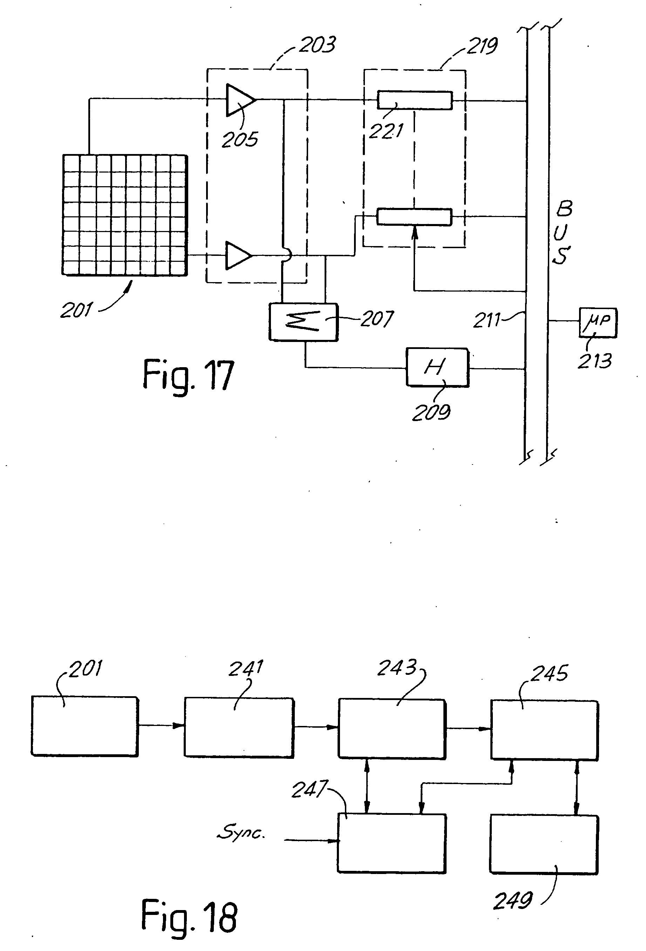

Fig. 17 shows a block diagram of the matrix sensor with the correction filter applied to the output signal of an adder which receives at its input the suitably amplified signals from the various electrodes of the matrix sensor. The number 201 indicates the whole of the matrix sensor and 203 indicates the combination of amplifiers 205 which receive the signals from the individual electrodes 7 of the sensor 201 and amplify them. The amplified signals are added in the adder, indicated as a whole in the diagram by 207. The signal supplied by the adder 207 is filtered by the amplitude response compensation filter, indicated by 209, which can be constructed, for example, as illustrated in Fig. 16. The number 211 indicates a bus for communication with a microcontroller 213. The signal from the filter 209 can be displayed directly, on an oscilloscope for example, or can be further processed and displayed in another way.

The diagram of Fig. 17 also shows a bank 219 of digital filters 221, for each amplified output of the sensor 201. These filters are band-pass filters which can be programmed according to the repetition frequency of the laser. This frequency is supplied to the filters 221 via the bus 211. The filters can thus be kept centered on the repetition frequency of the laser. Consequently the output signal from each channel will be purified, particularly by the removal of noise. Owing to the flexibility of the architecture, the programmable filters can be used in another operating mode for determining the amplitudes of all the significant harmonics of the signal, in such a way as to obtain the best performance as a function of noise (matched filter). This results in more accurate reproduction of the distribution of intensity in the cross section of the laser beam and also more accurate centering or estimation of the position of the centroid, when the sensor is used for these functions.

As mentioned previously, the filter for compensation of the amplitude response of the sensor can be implemented in digital rather than analog form. In this case, the electronic circuit of Fig. 16 is replaced by a FIR filter implemented in a microcontroller. In this case, the block diagram becomes that shown in Fig. 18. The number 201 again indicates the matrix-type pyroelectric sensor and 241 indicates the whole of the front-end electronics. The number 243 indicates an analog/digital converter, 245 indicates a programmable control unit and the corresponding memory, 247 indicates a control logic and 249 indicates a display device. A signal for synchronization with the laser is provided at the input of the control logic. The compensation filter can be made in the form of a FIR filter according to known methods.

The programmable band-pass filters shown in block 219 of the diagram of Fig. 17 can also be implemented in digital form.

It is to be understood that the drawing shows only one possible embodiment of the invention, which can be varied in its forms and arrangements without departure from the scope of the fundamental principle of the invention as defined in the appended claims. The presence of any reference numbers in the attached claims has the sole purpose of facilitating the reading of the claims with reference to the preceding description and to the attached drawings, and does not in any way limit the scope of protection as defined in the appended claims.

## Claims

1. Method for the fabrication of a pyroelectric sensor comprising a film (1) of pyroelectric polymer material (3), said sensor including an essentially continuous electrode (5A) on a first face (1A) of said film (3) and a two-dimensional distribution of separate electrodes (7) on the second face (1 B) of said film (3), **characterized by** the following steps:

   - providing a portion (1) of polarized pyroelectric polymer film (3), metallized in an essentially continuous way on both of its principal faces (1A; 1B);
- simultaneously removing part of the metallization on said two faces (1A, 1B) by laser ablation, thus creating on both faces discrete electrodes (5, 7) which correspond to each other and which are distributed according to a two-dimensional distribution;
- restoring the continuity of the metallization on a first (1A) of said two faces, forming an essentially continuous single electrode (5A) on this face.

2. Method for the fabrication of a pyroelectric sensor comprising a film (1) of pyroelectric polymer material (3), said sensor including an essentially continuous electrode (5A) formed on a first face (1A) of said film (3) and a two-dimensional distribution of separate electrodes (7) on the second face (1B) of said film (3), **characterized by** the following steps:

- providing a portion (1) of polarized pyroelectric polymer film (3);
- metallizing a face (1 B) of said portion of film in an essentially continuous way;
- removing part of the metallization on said face (1B) by laser ablation, thus creating said two-dimensional distribution of separate electrodes (7);
- metallizing the opposing face (1A) of the portion (1) of pyroelectric polymer film (3) to form said essentially continuous electrode (5A) on it.

3. Method according to claim 1 or 2, **characterized in that** at least part of the polymer film is depolarized along the separating lines between the electrodes simultaneously with said laser ablation.

4. Method according to one or more of the preceding claims, **characterized in that** a plurality of electrically conductive pads (16) is formed on a back support (10) according to a distribution corresponding to said two-dimensional distribution of electrodes (7); and **in that** the electrodes of said two-dimensional distribution of electrodes (7) are bonded by means of an electrically conductive adhesive (C) to said pads (16).

5. Method according to Claim 4, **characterized in that** a front support (12) is applied on top of said back support (10) and is provided with an aperture, the portion of pyroelectric polymer film (3) with the corresponding electrodes being centered at the position of said aperture (15), said front support (12) having at least one electrical contact with the essentially continuous electrode (5A) formed on said portion of film (3).

6. Method according to Claim 5, **characterized in that** a conductive frame or track (18) is formed around said aperture (15) of the front support (12), and **in that** said conductive track (18) is brought into electrical contact with said essentially continuous electrode (5A).

7. Method according to Claim 6, **characterized in that** said front support (12) is bonded onto the essentially continuous electrode (5A) by means of a conductive adhesive applied between said frame (18) and said essentially continuous electrode (5A).

8. Method according to one or more of Claims 4 to 7, **characterized in that** the electrodes (7) of said two-dimensional arrangement are joined to the electrically conductive pads (16) of said back support (10) by means of a conductive adhesive.

9. Method according to one or more of Claims 4 to 8, **characterized in that** conductive tracks (11) are formed, on the surface of said back support (10) opposite the surface on which said electrically conductive pads (16) are formed, for electrical connection between first metallized through holes (14) formed at the positions of said pads (16) and second metallized through holes (13) formed in a perimetric area of said back support (10).

10. Method according at least to Claims 5 and 9, **characterized in that** metallized through holes (19) are formed in said front support (12) in positions corresponding to the positions of the second metallized through holes (13) in said back support (10).

11. Method according to one or more of the preceding claims, **characterized in that** the electrodes (7) of said two-dimensional distribution have thicknesses in the range from 0.01 to 1 micrometer.

12. Method according to one or more of the preceding claims, **characterized in that** the essentially continuous electrode (5A) has a thickness in the range from 0.01 to 1 micrometer.

13. Method according to one or more of the preceding claims, **characterized in that** said pyroelectric film is a film of polyvinylidene difluoride (PVDF).

14. Method according to one or more of the preceding claims, **characterized in that** said film has a thickness in the range from 10 to 100 micrometers.

15. Method according to one or more of the preceding claims, **characterized in that** said first and said second face of the pyroelectric film are metallized by vacuum deposition.

16. Method according to one or more of the preceding claims, **characterized in that** said essentially continuous electrode (6A) and said electrodes (7) of said two-dimensional distribution are made of gold.

17. Pyroelectric sensor fabricated by a method according to one or more of Claims 1 to 16.

18. Sensor according to claim 17, wherein said pyroelectric polymer film is polarized, and that part of the polymer film is depolarized along lines separating said discrete electrodes.

19. Sensor according to Claim 17or 18, in which said discrete electrodes (7) are electrically connected to conductive pads (16) formed on a back support (10).

20. Sensor according to Claim 19, in which said discrete electrodes (7) are bonded to said pads by means of an electrically conductive adhesive (C).

21. Sensor according to any one of Claims 17 to 20, in which said pyroelectric film is a film of polyvinylidene difluoride (PVDF).

22. Sensor according to one or more of Claims 17 to 21, in which said essentially continuous electrode (5A) and the electrodes (7) of said two-dimensional distribution of electrodes are made of gold.

23. Sensor according to one or more of Claims 17 to 22, in which said electrodes have thicknesses in the range from 0.01 to 1 micrometers.

24. Sensor according to one or more of Claims 27 to 23, **characterized in that** said film has a thickness in the range from approximately 1 to 10 micrometers.

25. Sensor according to at least Claim 19, comprising a front support (12) opposite said back support (10), with an intermediate aperture (15), the essentially continuous electrode (5A) being located at the position of said aperture (15).

26. Sensor according to Claim 25, in which said aperture (15) is surrounded by a conductive frame or track (18) in electrical contact with said essentially continuous electrode (5A).

27. Sensor according to Claim 26, in which said conductive frame or track is bonded by means of an electrically conductive adhesive (C) to said essentially continuous electrode (5A).

28. Sensor according to Claim 19 at least, in which said back support has a first series of metallized through holes (14) which bring said pads (16) into electrical connection with conductive tracks (11) formed on the face of the back support (10) opposite the face on which said pads (16) are formed, said conductive tracks electrically connecting the pads to a second series of metallized through holes (13) formed along a perimetric area of the back support (10).

29. Sensor according to at least Claims 25 and 28, in which said front support (12) has a third series of metallized through holes (19) aligned with the second series of metallized through holes (13) formed in the back support (10).

30. A device for characterizing a laser beam, comprising a sensor (201) according to one or more of Claims 17 to 29.

31. Device according to Claim 30, **characterized in that** it comprises a correction filter (209) for compensating the amplitude response of the sensor (201).

**32.** Device according to Claim 31, **characterized in that** said filter is an analog filter.

**33.** Device according to Claim 31, **characterized in that** said filter is a digital filter.

**34.** Device according to one or more of Claims 31 to 33, **characterized in that** said correction filter has a transfer function given by the product of two approximating functions, defined for two frequency ranges which are different from each other and partially overlapping.

**35.** Device according to one or more of Claims 30 to 34, **characterized in that** it comprises, for each of at least some of said discrete electrodes (7) of the sensor, a corresponding amplifier (205).

**36.** Device according to one or more of Claims 30 to 35, **characterized in that** it comprises an adder (207) which receives at its inputs the signals from two or more of the electrodes (7) of said sensor and which supplies at its output a signal consisting of the sum of said input signals.

**37.** Device according to Claims 34 and 36, **characterized in that** said adder receives at its inputs the signals from said amplifiers (205).

**38.** Device according to one or more of Claims 30 to 37, **characterized in that** it comprises, for each electrode of the sensor, a programmable band-pass filter (221) centered on the repetition frequency of the laser beam.

**39.** Use of a pyroelectric sensor according to one or more of Claims 17 to 29 for the temporal reconstruction of a laser pulse.

**40.** Use according to Claim 39, **characterized in that** it uses the signal from one of the electrodes of the sensor for the temporal reconstruction of the laser pulse.

**41.** Use according to Claim 39, **characterized in that** the signals from a plurality of the electrodes of the sensor are combined with each other and the variation of the laser pulse is reconstructed on the basis of the combination of said signals.

**42.** Use according to Claim 41, **characterized in that** said signals are added together.

**43.** Use according to one or more of Claims 39 to 42, **characterized in that** the amplitude response of the sensor is compensated by means of a correction filter.

**44.** Use according to Claim 3, **characterized in that** said correction filter has a transfer function given by the product of two approximating functions, defined for two frequency ranges which are different from each other and partially overlapping.

**Patentansprüche**

**1.** Verfahren zum Herstellen eines pyroelektrischen Sensors mit einem Film (1) aus pyroelektrischem Polymermaterial (3), wobei der Sensor eine im Wesentlichen zusammenhängende Elektrode (5A) auf einer ersten Fläche (1A) des Films (3) und eine zweidimensionale Verteilung von separaten Elektroden (7) auf der zweiten Fläche (1B) des Films (3) umfasst, **gekennzeichnet durch** die folgenden Schritte:

- Vorsehen eines Teils (1) von polarisiertem pyroelektrischen Polymerfilm (3), der in einer im Wesentlichen zusammenhängenden Weise auf beiden seiner Hauptflächen (1A, 1B) metallisiert ist,
- gleichzeitiges Entfernen eines Teils der Metallisierung auf den beiden Flächen (1A, 1B) **durch** Laserabtragung, wodurch auf beiden Flächen diskrete Elektroden (5, 7) erzeugt werden, die zueinander korrespondieren und die entsprechend einer zweidimensionalen Verteilung verteilt sind,
- Wiederherstellen des Zusammenhangs der Metallisierung auf einer ersten (1A) der beiden Flächen, wodurch eine im Wesentlichen zusammenhängende einzelne Elektrode (5A) auf dieser Fläche gebildet wird.

**2.** Verfahren zum Herstellen eines pyroelektrischen Sensors mit einem Film (1) aus pyroelektrischem Polymermaterial (3), wobei der Sensor eine im Wesentlichen zusammenhängende Elektrode (5A) aufweist, die auf einer ersten Fläche (1A) des Films (3) gebildet ist, und eine zweidimensionale Verteilung von separaten Elektroden (7) auf der zweiten Fläche (1B) des Films (3), **gekennzeichnet durch** die folgenden Schritte:

- Vorsehen eines Teils (1) von polarisiertem pyroelektrischen Polymerfilm (3),
- Metallisieren einer Fläche (1B) des Teils des Films in einer im Wesentlichen zusammenhängenden Weise,
- Entfernen eines Teils der Metallisierung auf der Fläche (1B) **durch** Laserabtragung, wodurch die zweidimensionale Verteilung von separaten Elektroden (7) gebildet wird,
- Metallisieren der gegenüberliegenden Fläche (1A) des Teils (1) des pyroelelektrischen Polymerfilms (3), um darauf die im Wesentlichen zusammenhängende Elektrode (5A) zu bilden.

3.  Verfahren nach Anspruch 1 oder 2, **dadurch gekennzeichnet, dass** zumindest ein Teil des Polymerfilms entlang der Trennlinie zwischen den Elektroden gleichzeitig mit dem Laserabtragen depolarisiert wird.

4.  Verfahren nach einem oder mehreren der vorstehenden Ansprüche, **dadurch gekennzeichnet, dass** eine Anzahl von elektrisch leitfähigen Kissen (16) auf einem Rückträger (10) gemäß einer Verteilung entsprechend der zweidimensionalen Verteilung von Elektroden (7) gebildet wird und dass die Elektroden (7) der zweidimensionalen Verteilung von Elektroden mittels eines elektrisch leitfähigen Klebemittels (C) mit den Kissen (16) verbunden werden.

5.  Verfahren nach Anspruch 4, **dadurch gekennzeichnet dass** ein Vorderträger (12) auf dem Oberteil des Rückträgers (10) angebracht wird und mit einer Öffnung versehen wird, wobei der Teil des pyroelektrischen Polymerfilms (3) mit den entsprechenden Elektroden an der Position der Öffnung (15) zentriert wird, wobei der Vorderträger (12) zumindest einen elektrischen Kontakt mit der im Wesentlichen zusammenhängenden Elektrode (5A) aufweist, die auf dem Teil des Films (3) gebildet ist.

6.  Verfahren nach Anspruch 5, **dadurch gekennzeichnet, dass** ein leitfähiger Rahmen oder eine Spur (18) um die Öffnung (15) des Vorderträgers (12) gebildet wird und dass die leitfähig Spur (18) in elektrischen Kontakt mit der im Wesentlichen zusammenhängenden Elektrode (5A) gebracht wird.

7.  Verfahren nach Anspruch 6, **dadurch gekennzeichnet, dass** der Vorderträger (12) auf die im Wesentlichen zusammenhängende Elektrode (5A) mittels eines leitfähigen Klebemittels aufgebracht wird, das zwischen den Rahmen (18) und der im Wesentlichen zusammenhängenden Elektrode (5A) aufgebracht wird.

8.  Verfahren nach einem oder mehreren der Ansprüche 4 bis 7, **dadurch gekennzeichnet, dass** die Elektroden (7) der zweidimensionalen Anordnung mit den elektrisch leitfähigen Kissen (16) des Rückträgers (10) mittels eines leitfähigen Klebemittels verbunden werden.

9.  Verfahren nach einem der Ansprüche 4 bis 8, **dadurch gekennzeichnet, dass** die leitfähigen Spuren (11) auf der Oberfläche des Rückträgers (10) gegenüber der Oberfläche gebildet werden, auf der die elektrisch leitfähigen Kissen (16) gebildet werden, zur elektrischen Verbindung zwischen ersten metallisierten Durchgangslöchern (14), die an den Positionen der Kissen (16) gebildet werden, und zweiten metallisierten Durchgangslöchern (13), die in einem Umfangsbereich des Rückträgers (10) gebildet werden.

10. Verfahren nach zumindest Anspruch 5 und 9, **dadurch gekennzeichnet, dass** die metallisierten Durchgangslöcher (19) in dem Vorderträger (12) in Positionen gebildet werden, die den Positionen der zweiten metallisierten Durchgangslöchern (13) des Rückträgers (10) entsprechen.

11. Verfahren nach einem oder mehreren der vorstehenden Ansprüche, dadurch gekenntzeichnet, dass die Elektroden (7) der zweidimensionalen Verteilung eine Dicke im Bereich von 0,01 bis 1 $\mu$m aufweisen.

12. Verfahren nach einem oder mehreren der vorstehenden Ansprüche, **dadurch gekennzeichnet, dass** die im Wesentlichen zusammenhängende Elektrode (5A) eine Dicke im Bereich von 0,01 bis 1 $\mu$m aufweist.

13. Verfahren nach einem oder mehreren der vorstehenden Ansprüche, **dadurch gekennzeichnet, dass** der pyroelektrische Film ein Film aus Polyvinylidendifluorid (PVDF) ist.

14. Verfahren nach einem oder mehreren der vorstehenden Ansprüche, **dadurch gekennzeichnet, dass** der Film eine Dicke im Bereich von 10 bis 100 $\mu$m aufweist.

**15.** Verfahren nach einem oder mehreren der vorstehenden Ansprüche, **dadurch gekennzeichnet, dass** die erste und die zweite Fläche des pyroelektrischen Films durch Vakuumabscheidung metallisiert werden.

**16.** Verfahren nach einem oder mehreren der vorstehenden Ansprüche, **dadurch gekennzeichnet, dass** die im Wesentlichen zusammenhängende Elektrode (5A) und die Elektroden (7) der zweidimensionalen Verteilung aus Gold gefertigt werden.

**17.** Pyroelektrischer Sensor, der durch ein Verfahren nach einem oder mehreren der Ansprüche 1 bis 16 hergestellt ist.

**18.** Sensor nach Anspruch 17, wobei der pyroelektrische Polymerfilm polarisiert ist und dass ein Teil des pyroelektrischen Films entlang von Linien depolarisiert ist, die die diskreten Elektroden trennen.

**19.** Sensor nach Anspruch 17 oder 18, wobei die diskreten Elektroden (7) elektrisch mit leitfähigen Kissen (16) verbunden sind, die auf einem Rückträger (10) gebildet sind.

**20.** Sensor nach Anspruch 19, wobei die diskreten Elektroden (7) mit den Kissen mittels eines elektrisch leitfähigen Klebemittels (C) verbunden sind.

**21.** Sensor nach einem der Ansprüche 17 bis 20, wobei der pyroelektrische Film ein Film aus Polyvinylidendifluorid (PVDF) ist.

**22.** Sensor nach einem oder mehreren der Ansprüche 17 bis 21, wobei die im Wesentlichen zusammenhängende Elektrode (5A) und die Elektroden (7) der zweidimensionalen Verteilung Elektroden sind, die aus Gold gefertigt sind.

**23.** Sensor nach einem oder mehreren der Ansprüche 17 bis 22, wobei die Elektroden eine Dicke im Bereich von 0,01 bis 1 $\mu$m aufweisen.

**24.** Sensor nach einem oder mehreren der Ansprüche 17 bis 23, **dadurch gekennzeichnet, dass** der Film eine Dicke im Bereich von etwa 1 bis 10 $\mu$m aufweist.

**25.** Sensor nach zumindest Anspruch 19 mit einem Vorderträger (12), der gegenüber des Rückträgers (10) angeordnet ist, mit einer Zwischenöffnung (15), wobei die im Wesentlichen zusammenhängende Elektrode (5A) an der Position der Öffnung (15) angeordnet ist.

**26.** Sensor nach Anspruch 25, wobei die Öffnung (15) von einem Rahmen oder einer Spur (18) umgeben ist, die in elektrischem Kontakt mit der im Wesentlichen zusammenhängenden Elektrode (5A) steht.

**27.** Sensor nach Anspruch 26, wobei der leitfähige Rahmen oder die Spur mittels eines elektrisch leitfähigen Klebemittels (C) mit der im Wesentlichen zusammenhängenden Elektrode (5A) verbunden ist.

**28.** Sensor zumindest nach Anspruch 19, wobei der Rückträger eine erste Reihe von metallisierten Durchgangslöchern (14) aufweist, die die Kissen (16) in elektrischer Verbindung mit leitfähigen Spuren (11) bringen, die auf der Fläche des Rückträgers (10) gegenüber der Fläche gebildet sind, auf denen die Kissen (16) gebildet sind, wobei die leitfähigen Spuren die Kissen mit einer zweiten Reihe von metallisierten Durchgangslöchern (13) elektrisch verbinden, die in einem Umfangsbereich des Rückträgers (10) gebildet sind.

**29.** Sensor nach zumindest Anspruch 25 und 28, wobei der Vorderträger (12) eine dritte Reihe von metallisierten Durchgangslöchern (19) aufweist, die mit der zweiten Reihe von metallisierten Durchgangslöchern (13), die in dem Rückträger (10) gebildet sind, ausgerichtet sind.

**30.** Vorrichtung zum Kennzeichnen eines Laserstrahls mit einem Sensor (201) nach einem oder mehreren der Ansprüche 17 bis 29.

**31.** Vorrichtung nach Anspruch 30, **dadurch gekennzeichnet, dass** sie einen Korrekturfilter (209) zum Kompensieren der Amplitudenantwort des Sensors (201) aufweist.

**32.** Vorrichtung nach Anspruch 31, **dadurch gekennzeichnet, dass** das Filter ein Analogfilter ist.

**33.** Vorrichtung nach Anspruch 31, **dadurch gekennzeichnet, dass** das Filter ein Digitalfilter ist.

**34.** Vorrichtung nach einem oder mehreren der Ansprüche 31 bis 33, **dadurch gekennzeichnet, dass** das Korrekturfilter eine Übertragungsfunktion aufweist, die durch das Produkt zweier Näherungsfunktionen gegeben ist, die für zwei Frequenzbereiche definiert sind, die sich voneinander unterscheiden und partiell überlappen.

**35.** Vorrichtung nach einem oder mehreren der Ansprüche 30 bis 34, **dadurch gekennzeichnet, dass** sie für jede von zumindest einigen der diskreten Elektroden (7) des Sensors einen entsprechenden Verstärker (205) aufweist.

**36.** Vorrichtung nach einem oder mehreren der Ansprüche 30 bis 35, **dadurch gekennzeichnet, dass** sie einen Addierer (207) aufweist, der an seinen Eingängen die Signale von zwei oder mehreren der Elektroden (7) des Sensors erhält und der an seinem Ausgang ein Signal liefert, das aus der Summe der Eingangssignale besteht.

**37.** Vorrichtung nach Anspruch 34 und 36, **dadurch gekennzeichnet, dass** der Addierer an seinen Eingängen die Signale von den Verstärkern (205) erhält.

**38.** Vorrichtung nach einem oder mehreren der Ansprüche 30 bis 37, **dadurch gekennzeichnet, dass** sie für jede Elektrode des Sensors ein programmierbares Bandpassfilter (221) aufweist, das bei der Wiederholungsfrequenz des Laserstrahls zentriert ist.

**39.** Verwendung eines pyroelektrischen Sensors nach einem oder mehreren der Ansprüche 17 bis 29 für die temporäre Wiederherstellung eines Laserpulses.

**40.** Verwendung nach Anspruch 39, **dadurch gekennzeichnet, dass** sie das Signal von einer der Elektroden des Sensors für die temporäre Wiederherstellung des Laserpulses verwendet.

**41.** Verwendung nach Anspruch 39, **dadurch gekennzeichnet, dass** die Signale von einer Anzahl der Elektroden des Sensors miteinander kombiniert werden und die Variation des Laserpulses auf Grundlage der Kombination der Signale wiederhergestellt wird.

**42.** Verwendung nach Anspruch 41, **dadurch gekennzeichnet, dass** die Signale miteinander addiert werden.

**43.** Verwendung nach einem oder mehreren der Ansprüche 39 bis 42, **dadurch gekennzeichnet, dass** die Amplitudenantwort des Sensors mittels eines Korrekturfilters kompensiert wird.

**44.** Verwendung nach Anspruch 43, **dadurch gekennzeichnet, dass** das Korrekturfilter eine Übertragungsfunktion aufweist, die durch das Produkt zweier Näherungsfunktionen gegeben ist, die durch zwei Frequenzbereiche definiert sind, die sich voneinander unterscheiden und partiell überlappen.

**Revendications**

**1.** Procédé de fabrication d'un capteur pyroélectrique comprenant un film (1) de matériau polymère pyroélectrique (3), ledit capteur comprenant une électrode essentiellement continue (5A) sur une première face (1A) dudit film (3) et une répartition bidimensionnelle d'électrodes séparées (7) sur la deuxième face (1B) dudit film (3), **caractérisé par** les étapes suivantes :

   - la fourniture d'une section (1) de film polymère pyroélectrique polarisé (3), métallisé d'une façon essentiellement continue sur ses deux faces principales (1A ; 1B) ;
   - l'élimination simultanée d'une partie de la métallisation sur lesdites deux faces (1A ; 1B) par ablation laser, pour ainsi créer sur les deux faces des électrodes discrètes (5, 7) qui correspondent les unes aux autres et qui sont réparties selon une répartition bidimensionnelle ;
   - le rétablissement de la continuité de la métallisation sur une première face (1A) desdites deux faces, pour former une seule électrode (5A) essentiellement continue sur cette face.

**2.** Procédé de fabrication d'un capteur pyroélectrique comprenant un film (1) de matériau polymère pyroélectrique (3), ledit capteur comprenant une électrode essentiellement continue (5A) formée sur une première face (1A) dudit film (3) et une répartition bidimensionnelle d'électrodes séparées (7) sur la deuxième face (1B) dudit film (3), **caractérisé**

**par** les étapes suivantes :

- la fourniture d'une section (1) de film polymère pyroélectrique polarisé (3) ;
- la métallisation d'une face (1B) de ladite section de film d'une façon essentiellement continue ;
- l'élimination d'une partie de la métallisation sur ladite face (1B) par ablation laser, pour ainsi créer ladite répartition bidimensionnelle d'électrodes séparées (7) ;
- la métallisation de la face opposée (1A) de la section (1) du film polymère pyroélectrique (3) pour former sur elle ladite électrode essentiellement continue (5A).

3. Procédé selon la revendication 1 ou 2, **caractérisé en ce qu'**au moins une partie du film polymère est dépolarisée le long des lignes de séparation entre les électrodes en même temps que ladite ablation laser.

4. Procédé selon l'une quelconque des revendications précédentes, **caractérisé en ce qu'**une pluralité de plots électriquement conducteurs (16) est formée sur un support arrière (10) selon une répartition correspondant à ladite répartition bidimensionnelle d'électrodes (7) ; et **en ce que** les électrodes de ladite répartition bidimensionnelle d'électrodes (7) sont collées au moyen d'un adhésif électriquement conducteur (C) auxdits plots (16).

5. Procédé selon la revendication 4, **caractérisé en ce qu'**un support avant (12) est appliqué au-dessus dudit support arrière (10) et est doté d'une ouverture, la section de film polymère pyroélectrique (3) dotée des électrodes correspondantes étant centrée à la position de ladite ouverture (15), ledit support avant (12) ayant au moins un contact électrique avec l'électrode essentiellement continue (5A) formée sur ladite section de film (3).

6. Procédé selon la revendication 5, **caractérisé en ce qu'**un cadre conducteur ou piste conductrice (18) est formé autour de ladite ouverture (15) du support avant (12) et **en ce que** ladite piste conductrice (18) est mise en contact électrique avec ladite électrode essentiellement continue (5A).

7. Procédé selon la revendication 6, **caractérisé en ce que** ledit support avant (12) est collé sur l'électrode essentiellement continue (5A) au moyen d'un adhésif conducteur appliqué entre ledit cadre (18) et ladite électrode essentiellement continue (5A).

8. Procédé selon l'un quelconque des revendications 4 à 7, **caractérisé en ce que** les électrodes (7) dudit agencement bidimensionnel sont reliées aux plots électriquement conducteurs (16) dudit support arrière (10) au moyen d'un adhésif conducteur.

9. Procédé selon l'un quelconque des revendications 4 à 8, **caractérisé en ce que** des pistes conductrices (11) sont formées sur la surface dudit support arrière (10) opposée à la surface sur laquelle lesdits plots électriquement conducteurs (16) sont formés, pour une connexion électrique entre des premiers trous débouchants métallisés (14) formés aux positions desdits plots (16) et des deuxièmes trous débouchants métallisés (13) formés dans une zone périmétrique dudit support arrière (10).

10. Procédé selon au moins les revendications 5 et 9, **caractérisé en ce que** des trous débouchants métallisés (19) sont formés dans ledit support avant (12) à des positions correspondant aux positions des deuxièmes trous débouchants métallisés (13) dans ledit support arrière (10).

11. Procédé selon l'une quelconque des revendications précédentes, **caractérisé en ce que** les électrodes (7) de ladite répartition bidimensionnelle possèdent des épaisseurs situées dans la plage allant de 0,01 à 1 micromètre.

12. Procédé selon l'une quelconque des revendications précédentes, **caractérisé en ce que** l'électrode essentiellement continue (5A) possède une épaisseur située dans la plage allant de 0,01 à 1 micromètre.

13. Procédé selon l'une quelconque des revendications précédentes, **caractérisé en ce que** ledit film pyroélectrique est un film de poly(difluorure de vinylidène) (PVDF).

14. Procédé selon l'une quelconque des revendications précédentes, **caractérisé en ce que** ledit film possède une épaisseur située dans la plage allant de 10 à 100 micromètres.

15. Procédé selon l'une quelconque des revendications précédentes, **caractérisé en ce que** ladite première et ladite deuxième faces du film pyroélectrique sont métallisées par dépôt sous vide.

**16.** Procédé selon l'une quelconque des revendications précédentes, **caractérisé en ce que** ladite électrode essentiellement continue (5A) et lesdites électrodes (7) de ladite répartition bidimensionnelle sont faites en or.

**17.** Capteur pyroélectrique fabriqué par un procédé selon l'une quelconque des revendications 1 à 16.

**18.** Capteur selon la revendication 17, dans lequel ledit film polymère pyroélectrique est polarisé et une partie du film polymère est dépolarisée le long des lignes séparant lesdites électrodes discrètes.

**19.** Capteur selon la revendication 17 ou 18, dans lequel lesdites électrodes discrètes (7) sont électriquement connectées à des plots conducteurs (16) formés sur un support arrière (10).

**20.** Capteur selon la revendication 19, dans lequel lesdites électrodes discrètes (7) sont collées sur lesdits plots au moyen d'un adhésif électriquement conducteur (C).

**21.** Capteur selon l'une quelconque des revendications 17 à 20, dans lequel ledit film pyroélectrique est un film de poly (difluorure de vinylidène) (PVDF).

**22.** Capteur selon l'une quelconque des revendications 17 à 21, dans lequel ladite électrode essentiellement continue (5A) et les électrodes (7) de ladite répartition bidimensionnelle sont faites en or.

**23.** Capteur selon l'une quelconque des revendications 17 à 22, dans lequel lesdites électrodes possèdent des épaisseurs situées dans la plage allant de 0,01 à 1 micromètre.

**24.** Capteur selon l'une quelconque des revendications 27 à 23, **caractérisé en ce que** ledit film possède une épaisseur située dans la plage allant de 1 à 10 micromètres.

**25.** Capteur selon au moins la revendication 19, comprenant un support avant (12) opposé audit support arrière (10), doté d'une ouverture intermédiaire (15), l'électrode essentiellement continue (5A) étant située à la position de ladite ouverture (15).

**26.** Capteur selon la revendication 25, dans lequel ladite ouverture (15) est entourée par un cadre conducteur ou une piste conductrice (18) en contact électrique avec ladite électrode essentiellement continue (5A).

**27.** Capteur selon la revendication 26, dans lequel ledit cadre conducteur ou ladite piste conductrice est collé au moyen d'un adhésif électriquement conducteur (C) sur ladite électrode essentiellement continue (5A).

**28.** Capteur selon au moins la revendication 19, dans lequel ledit support arrière présente une première série de trous débouchants métallisés (14) qui mettent lesdits plots (16) en connexion électrique avec des pistes conductrices (11) formées sur la face du support arrière (10) opposée à la face sur laquelle lesdits plots (16) sont formés, lesdites pistes conductrices connectant électriquement les plots à une deuxième série de trous débouchants métallisés (13) formés le long d'une zone périmétrique du support arrière (10).

**29.** Capteur selon au moins les revendications 25 et 28, dans lequel ledit support avant (12) présente une troisième série de trous débouchants métallisés (19) alignée avec la deuxième série de trous débouchants métallisés (13) formés dans le support arrière (10).

**30.** Dispositif servant à caractériser un faisceau laser, comprenant un capteur (201) selon l'une quelconque des revendications 17 à 29.

**31.** Dispositif selon la revendication 30, **caractérisé en ce qu'**il comprend un filtre de correction (209) servant à compenser la réponse en amplitude du capteur (201).

**32.** Dispositif selon la revendication 31, **caractérisé en ce que** ledit filtre est un filtre analogique.

**33.** Dispositif selon la revendication 31, **caractérisé en ce que** ledit filtre est un filtre numérique.

**34.** Dispositif selon l'une quelconque des revendications 31 à 33, **caractérisé en ce que** ledit filtre de correction possède une fonction de transfert donnée par le produit de deux fonctions d'approximation, définies pour deux gammes de fréquences qui sont différentes l'une de l'autre et qui se chevauchent partiellement.

**35.** Dispositif selon l'une quelconque des revendications 30 à 34, **caractérisé en ce qu'**il comprend, pour chacune d'au moins certaines desdites électrodes discrètes (7) du capteur, un amplificateur correspondant (205).

**36.** Dispositif selon l'une quelconque des revendications 30 à 35, **caractérisé en ce qu'**il comprend un additionneur (207) qui reçoit à ses entrées les signaux provenant de deux ou plus de deux des électrodes (7) dudit capteur et qui fournit à sa sortie un signal consistant en la somme desdits signaux d'entrée.

**37.** Dispositif selon les revendications 34 et 36, **caractérisé en ce que** ledit additionneur reçoit à ses entrées les signaux provenant desdits amplificateurs (205).

**38.** Dispositif selon l'une quelconque des revendications 30 à 37, **caractérisé en ce qu'**il comprend, pour chaque électrode du capteur, un filtre passe-bande programmable (221) centré sur la fréquence de répétition du faisceau laser.

**39.** Utilisation d'un capteur pyroélectrique selon l'une quelconque des revendications 17 à 29, pour la reconstruction temporelle d'une impulsion laser.

**40.** Utilisation selon la revendication 39, **caractérisée en ce qu'**elle utilise le signal provenant d'une des électrodes du capteur pour la reconstruction temporelle de l'impulsion laser.

**41.** Utilisation selon la revendication 39, **caractérisée en ce que** les signaux provenant d'une pluralité des électrodes du capteur sont combinés les uns avec les autres et la variation de l'impulsion laser est reconstruite sur la base de la combinaison desdits signaux.

**42.** Utilisation selon la revendication 41, **caractérisée en ce que** lesdits signaux sont ajoutés les uns aux autres.

**43.** Utilisation selon l'une quelconque des revendications 39 à 42, **caractérisée en ce que** la réponse en amplitude du capteur est compensée au moyen d'un filtre de correction.

**44.** Utilisation selon la revendication 3, **caractérisée en ce que** ledit filtre de correction possède une fonction de transfert donnée par le produit de deux fonctions d'approximation, définies pour deux gammes de fréquences qui sont différentes l'une de l'autre et qui se chevauchent partiellement.

1A

1

3

(A)

1B

5

1

3

(B)

7

5A

1

(C)

7

Fig.1

Fig.2

Fig.3

Fig.4

Fig.5

Fig. 6

Fig.7

Fig. 8A

Fig.8B

**Fig.9**

freq (Hz)

**Fig.10**

*111*     *113*     *115*

H (f) → H somm (f) → Hc (f)

**Fig.11**

C-FI

I

freq (Hz)

Fig.12

$H_c(f)$

$H_c(f)$

$H_{fit}(f)$

$H(f)$

$H(f)$

$H_{fit}(f)$

freq (Hz)

Fig.13

$H(f) - H_{fit}(f)$

$H_{fit2}(f)$

freq (Hz)

$P(f)$ → | 121 $H(f)$ | → | 123 $H_{fit}(f)$ | → | 125 $H_{fit2}(f)$ | → $V_{out}(f)$

Fig. 14

**Fig.15**

**Fig.16**

Fig. 17

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6175114 A
- US 3581092 A
- US 4250384 A
- US 4532424 A
- EP 0269161 A
- EP 0402986 A
- US 5980101 A
- US 6262418 A
- US 4906849 A
- US 4804844 A

### Non-patent literature cited in the description

- Fabrication of pyroelectric PVDF linear arrays for diagnostic systems of high power CO2 laser beams. **L. CAPINERI ; L. MASOTTI ; P. MAZZINGHI ; M. MAZZONI.** Proceedings of the 5th Italian Conference Sensors and Microsystems. World Scientific Publ. Singapore Co.bPte. Ltd, 2000, 411-415